# EUROPÄISCHE PATENTSCHRIFT

(11) **EP 2 702 746 B1**
(45) Veröffentlichungstag und Bekanntmachung des Hinweises auf die Patenterteilung: **15.08.2018**
(21) Anmeldenummer: 12710071.7
(22) Anmeldetag: 15.03.2012
(51) Int. Cl.: H04W 4/44, H04L 29/08, H04L 29/06, G01C 21/28, G08G 1/01, G08G 1/04, G08G 1/052

(54) **VERFAHREN ZUR ÜBERPRÜFUNG VON KOMMUNIKATIONSBOTSCHAFTEN IN DER FAHRZEUG-ZU-UMGEBUNG-KOMMUNIKATION UND GEEIGNETER EMPFÄNGER**
METHOD FOR CHECKING COMMUNICATION MESSAGES IN VEHICLE-TO-ENVIRONMENT COMMUNICATION AND SUITABLE RECEIVER
PROCÉDÉ DE CONTRÔLE DE MESSAGES DE COMMUNICATION DANS LA COMMUNICATION ENTRE UN VÉHICULE ET L'ENVIRONNEMENT, ET RÉCEPTEUR APPROPRIÉ

(30) Priorität: 26.04.2011 DE 102011018571
(43) Veröffentlichungstag der Anmeldung: 05.03.2014
(73) Patentinhaber: Continental Automotive GmbH, 30165 Hannover (DE)
(72) Erfinder: MENZEL, Marc, 35096 Weimar (Lahn) (DE); STÄHLIN, Ulrich, 65760 Eschborn (DE)
(86) Internationale Anmeldenummer: PCT/EP2012/054535
(87) Internationale Veröffentlichungsnummer: WO 2012/146439

(56) Entgegenhaltungen:
- WO-A2-2009/101163
- DE-A1-102004 010 197
- DE-A1-102005 058 628
- DE-A1-102008 053 531
- DE-A1-102009 017 731

## Beschreibung

Die Erfindung betrifft ein Verfahren zur Überprüfung von Kommunikationsbotschaften in der Fahrzeug-zu-Umgebung-Kommunikation, welche auch als C2X-Kommunikation bezeichnet wird, sowie einen geeigneten Empfänger. Bei dem Verfahren zur Überprüfung wird eine Kommunikationsbotschaft empfangen und ausgewertet.

Im Rahmen der C2X-Kommunikation, für die gerade ein einheitlicher Standard festgelegt werden soll, wird auch die Sicherheit der ausgetauschten Funkbotschaften sowie der darin enthaltenen Informationen diskutiert. Die auf der C2X-Kommunikation basierenden Systeme bieten eine Fülle von neuen Möglichkeiten für Fahrerassistenzsysteme, Fahrzeugsicherheitssysteme, Systeme zur Verbesserung der Mobilität und sonstige erweiterte Dienste. Dokument WO 2009/101163 A2 offenbart Assistenz-, Sicherheits- und Navigationstechnik für Fahrzeuge.

Es besteht jedoch die Gefahr, dass diese zusätzlichen Systeme und Funktionen in ihren Informationsgehalt oder sogar in ihrer Sicherheit beeinträchtigt werden, wenn missbräuchlich falsche Informationen über die C2X-Kommunikation verbreitet werden.

Ziel der bisher bekannten Ansätze für die Sicherheit der C2X-Kommunikation sind vor allem der Schutz der Privatsphäre, die Authentifizierung des Absenders und der Schutz gegen Hacking mittels kryptografischer Methoden. Das Hauptziel hierbei ist ein System zu schaffen, welches gegenüber den möglichen Gefahren geschützt und unanfällig ist.

Die Geschichte der Computertechnologie und Software zeigt jedoch, dass es eine vollständige Systemsicherheit von Computersystemen nicht gibt. Wenn die innere Sicherheit der Systeme durch technische Maßnahmen nicht greift, besteht nur noch die Möglichkeit der Identifikation der die Schwachstellen des Systems ausnutzenden Täter und eine Strafverfolgung. Allerdings besteht bei Computersystemen im Allgemeinen und bei der C2X-Kommunikation im Speziellen das Problem, Fehlinformationen zu erkennen und den Absender dieser Information zu identifizieren.

Aufgabe der vorliegenden Erfindung ist es daher, eine Möglichkeit zur zuverlässigen Überprüfung der in einer C2X-Kommunikationsbotschaft übermittelten Informationen zeitnah zu ermöglichen.

Diese Aufgabe wird erfindungsgemäß durch das Verfahren gemäß Anspruch 1 und den zur Durchführung des Verfahrens vorgesehenen Empfänger gemäß Anspruch 5 gelöst.

Bei der erfindungsgemäß vorgesehenen Überprüfung der Kommunikationsbotschaft ist vorgesehen, dass ein aus dem Inhalt der Kommunikationsbotschaft erhaltenes bzw. abgeleitetes Merkmal mit einem diesem Merkmal entsprechenden Merkmal verglichen wird, das durch eine von der Fahrzeug-zu-Umgebung-Kommunikation unabhängige Sensorik erhalten wird. Es werden die mittels C2X-Kommunikation versendeten Funkbotschaften also durch solche Mittel und Sensoren überprüft, die nicht durch die Kommunikation beeinflusst werden. Dies können einfacherweise Kameras und/oder andere Umfeldsensoren des Empfängers sein, wobei in dieser Anmeldung unter Empfänger nicht die Empfängereinheit, sondern der mit der Empfängereinheit ausgestattete Teilnehmer an der C2X-Kommunikation verstanden wird.

Eine weitere grundsätzliche Möglichkeit zur Überprüfung der C2X-Kommunikationsbotschaften ergibt sich durch einen Vergleich von Inhalt und Physik der Kommunikation, also beispielsweise der verwendeten Position im Inhalt der Kommunikationsbotschaft und der ermittelten Position des Senders beispielsweise durch eine Peilung. Ähnlich wie der Empfänger ist auch der Sender nicht als Sendeeinheit, sondern als der mit der Sendeeinheit ausgestattete Teilnehmer im Kommunikationsnetz, beispielsweise ein Fahrzeug, eine Road Side Unit RSU, eine Ampel oder ein sonstiger beliebiger Teilnehmer, zu verstehen.

Aufgrund des direkten Vergleichs des Inhalts der Kommunikationsbotschaft mit durch Sensoren erfassten Größen ist das vorgeschlagene Verfahren erfindungsgemäß vor allem für eine direkte C2X-Kommunikation geeignet, d. h. eine Kommunikation ohne ein die Kommunikationsbotschaften übertragendes Backend. Die Erfindung ist auf diese Kommunikationsart jedoch nicht beschränkt. Beispiele für diese direkten Kommunikationstechnologien sind insbesondere die WLAN-Kommunikation nach einem der Standards IEEE 802.11a/b/g/n/p, WiMax, Bluetooth, ZigBee, RKE (Remote Keyless Entry), IR (Infrarot) etc..

Gemäß einer bevorzugten Ausführungsform des vorgeschlagenen Verfahrens kann das aus der Kommunikationsbotschaft erhaltene Merkmal eine in der C2X-Kommunikation übertragenen Position und/oder Geschwindigkeit des teilnehmenden Senders, beispielsweise des Kraftfahrzeugs, sein. Als Vergleichswert sind dann die Position und/oder Geschwindigkeit des teilnehmenden Senders durch eine unabhängige Sensorik ermittelbar.

Eine geeignete Sensorik kann beispielsweise eine Funkpeilung anhand des empfangenen Funksignals, welche die Empfangsrichtung erkennt, durchführen, wobei durch mehrere Funkpeilungen mit örtlich voneinander getrennten Antennen über trigonometrische Funktionen, beispielsweise Triangulationsmethoden, die Position des Senders ermittelbar ist. Erfindungsgemäß ist für die verschiedenen Antennen insbesondere eine geeignet gewählte Anordnung von Richtantennen sinnvoll. Durch zeitlich aufeinanderfolgende Messungen in der Funkpeilung ist auch eine Geschwindigkeitsmessung möglich. Darüber hinaus kann durch Auswerten der Empfangsfeldstärke die Entfernung zwischen Empfänger und Sender ermittelt oder abgeschätzt werden.

Eine Positions- und Geschwindigkeitsmessung kann auch durch Radar- oder Lasermessgeräte bzw. allgemein durch eine Sensorik erfolgen, welche durch Aussenden von Strahlen und Empfang von an einem Objekt reflektierten Strahlen eine Geschwindigkeitsmessung vornehmen. Über die absolute Laufzeit ist bei ausreichend gerichteter Strahlung auch eine Positionsbestimmung möglich.

Als weitere Sensorik kommen erfindungsgemäß natürlich insbesondere Kameras in Frage, bei der über eine Bildauswertung eine Positionsbestimmung möglich ist, wenn die Kamera kalibriert und gegebenenfalls bestimmte Merkmale des Objekts bekannt sind, beispielsweise die Größe des Nummernschilds. Aus diesen Informationen kann dann die Position des Objektes im dreidimensionalen Raum bestimmt werden. Ohne Kenntnis bestimmter Merkmale des Objektes kann eine Positionsauswertung auch mittels Stereokameras erfolgen.

Die vorgenannte Sensorik eignet sich besonders gut für die Durchführung des erfindungsgemäßen Verfahrens. Die Erfindung ist jedoch nicht unbedingt auf diese Sensorik beschränkt, sondern umfasst auch andere geeignete Sensorik, welche in der Lage ist, die in den Funkbotschaften inhaltlich übermittelten Informationen durch eigene Erfassung entsprechender Informationen losgelöst von der Kommunikation zu ermitteln.

Gemäß einer alternativen oder zusätzlichen Ausführungsform des erfindungsgemäßen Verfahrens kann auch vorgesehen sein, dass das aus der Kommunikationsbotschaft erhaltene Merkmal eine in der C2X-Kommunikation übertragene Typisierung des teilnehmenden Senders ist und dass der Typ des teilnehmenden Senders durch eine unabhängige Sensorik ermittelbar ist. Hier bietet sich als Sensorik insbesondere eine Kamera mit Bildauswertung an, um beispielsweise den Typ "Einsatzfahrzeuge", gegebenenfalls mit Erkennung einer Notfallfahrt durch Einschalten des Blaulichts oder Martinshorn durch optische respektive akustische Sensorik und Auswertung, festzustellen. Eine Typisierung des teilnehmenden Senders kann auch im Rahmen einer Verkehrsflusserkennung erfolgen, in der beispielsweise durch eine Sendeeinheit der Verkehrsfluss gezählt und an eine übergeordnete Zentrale geschickt wird. Diese Zentrale kann beispielsweise über einen gesonderten Empfänger die Informationen über diesen Verkehrsfluss prüfen.

In einer weiteren Ausführungsform der vorliegenden Erfindung, welche gegebenenfalls auch zusätzlich zu den vorbeschriebenen Überprüfungsmethoden eingesetzt werden kann, liegt darin, dass das aus der Kommunikationsbotschaft erhaltene Merkmal ein in der C2X-Kommunikation übertragener Zustand des teilnehmenden Senders ist, und dass der Zustand des teilnehmenden Senders durch die unabhängige Sensorik ermittelbar ist.

Der teilnehmende Sender kann in diesem Fall beispielsweise eine Ampel sein, die ihren Zustand (rot, gelb, grün) in der C2X-Kommunikation überträgt. Als Empfänger kommt beispielsweise ein Überwachungsgerät mit Kamera in Frage, welches den Zustand der Ampel optisch überwacht. Hierdurch lassen sowohl Fehler in der von der Ampel ausgehenden Kommunikation als auch mögliche Fehlinformationen durch einen etwas abseitig der Ampel installierten Drittsender feststellen und gegebenenfalls weitere Überprüfungen einleiten.

Erfindungsgemäß ist es besonders vorteilhaft, wenn bei einer fehlenden Übereinstimmung, beispielsweise ermittelt durch Überschreiten von für das erhaltene Merkmal und/oder die Sensorik geeignete Toleranzbereiche, durch den Empfänger eine Nachricht erzeugt wird, welche Rückschlüsse auf die Identität des Senders zulässt und/oder dessen identifizieren ermöglicht. In diesen Nachrichten können insbesondere Fotos, aus Fotos extrahierte Daten, beispielsweise ein Nummernschild, eine Sendeeinrichtungs-ID-Kennung, beispielsweise MAC, eine Position eines stationären Senders oder dergleichen sein. Die Nachricht kann über C2X- oder andere Kommunikation an eine Auswertestelle übertragen werden, wobei die Auswertestelle sowohl eine zentrale als auch eine mobile Einsatzzentrale sein kann. Es ist auch möglich, die Nachrichten zur Abrufung bzw. Auslesung in einer Speichereinheit des Empfängers abzulegen und dort geeignet abzurufen. Durch derartige Nachrichten wird es in vielen Fällen möglich sein, einen bewussten Falschsender zu identifizieren und gleichzeitig die fehlerhafte Kommunikationsbotschaft gerichtsfest zu dokumentieren.

Die Erfindung betrifft auch einen Empfänger zur Durchführung eines Verfahrens zur Überprüfung von Kommunikationsbotschaften in der Fahrzeug-zu-Umgebung-Kommunikation (C2X-Kommunikation), bei dem eine Kommunikationsbotschaft empfangen und ausgewertet wird, wobei der Empfänger eine Empfangseinrichtung für den Empfang sowie gegebenenfalls eine Sendeeinrichtung für das Aussenden von Kommunikationsbotschaften in der Fahrzeug-zu-Umgebung-Kommunikation, eine von der Fahrzeug-zu-Umgebung-Kommunikation unabhängige Sensoreinrichtung und eine Recheneinheit aufweist. Erfindungsgemäß ist die Recheneinheit dazu eingerichtet, ein das vorstehende Verfahren oder Teile hiervon durchzuführen.

Gemäß einer bevorzugten Ausführungsform weist die Sensoreinrichtung eine Kamera, gegebenenfalls auch eine Stereokamera, eine Funkpeileinrichtung, vorzugsweise mit einem Array von Richtantennen, oder ein Geschwindigkeitsmessgerät auf. Das Geschwindigkeitsmessgerät kann ein Radar- oder Lasermessegerät beziehungsweise allgemein eine Sensorik sein, welche durch Aussenden von Strahlen und Empfangen von an einem Objekt reflektierten Strahlen eine wie bereits beschrieben Geschwindigkeits- oder Positionsmessung vornehmen kann. Ferner kommen erfindungsgemäß andere Sensoren in Frage, die geeignet sind, den Inhalt einer Kommunikationsbotschaft mit eigenen Sensor-Messwerten zu erfassen.

Erfindungsgemäß kann der Empfänger als mobile oder stationäre Einheit ausgebildet sein. Eine mobile Empfängereinheit hat den Vorteil, dass diese flexibel an verschiedenen Orten eingesetzt werden kann, um die C2X-Kommunikation zu testen, beispielsweise auch im Rahmen von polizeilich durchgeführten Kontrollen. Stationäre Einheiten können vorzugsweise in ohnehin an der C2X-Kommunikation teilnehmende Einheiten integriert sein und so dauerhaft, vorzugsweise an besonders sicherheitsrelevanten Stellen des C2X-Kommunikationsnetzes, eine geeignete inhaltliche Überprüfung der C2X-Botschaften vorzunehmen, um im Falle von gezielten Falschinformationen oder Fehlern einzugreifen.

Sowohl ein mobiler als auch stationärer Empfänger können in einen Teilnehmer an der Fahrzeug-zu-Umgebung-Kommunikation mit weiteren Funktionen integriert sein.

Weitere Vorteile, Merkmale oder Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen. Es zeigen:
- Fig. 1: einen erfindungsgemäßen Empfänger mit einer Kamera als Sensoreinheit;
- Fig. 2: einen erfindungsgemäßen Empfänger mit einer Anordnung von Richtantennen als Sensoreinheit;
- Fig. 3: einen erfindungsgemäßen Empfänger mit einer Stereokamera als Sensoreinheit und
- Fig. 4: einen Empfänger mit einer Kamera als Sensoreinheit zur Zustandsüberwachung eines Teilnehmers an der Fahrzeug-zu-Umgebung-Kommunikation.

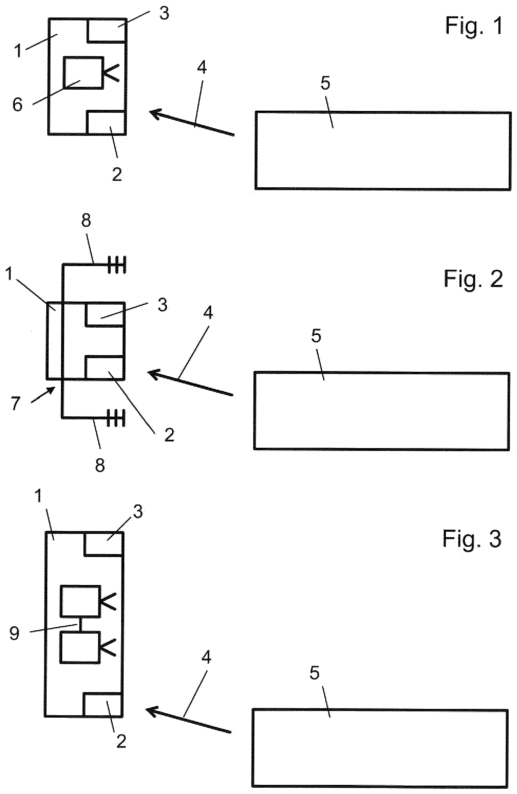

Jeder der in den Fig. 1 bis 4 dargestellten Empfänger 1 weist zur Teilnahme an der Fahrzeug-zu-Umgebung-Kommunikation eine Empfangseinrichtung 2 auf, die in der Lage ist, Kommunikationsbotschaften 4 in der Fahrzeug-zu-Umgebung-Kommunikation zu empfangen. Gegebenenfalls kann die Empfangseinrichtung auch als kombinierte Empfangs- und Sendeeinrichtung 2 ausgebildet sein, welche neben dem Empfang von Kommunikationsbotschaften 4 auch in der Lage ist, entsprechende Kommunikationsbotschaften 4 über die Fahrzeug-zu-Umgebung-Kommunikation auszusenden. Ferner weist der Empfänger 1 eine Recheneinheit 3 auf, die zur erfindungsgemäßen Durchführung des Verfahrens zur Überprüfung von Kommunikationsbotschaften 4 in der Fahrzeug-zu-Umgebung-Kommunikation eingerichtet ist.

Hierzu werden die durch die Empfangseinheit 2 empfangenen Kommunikationsbotschaften 4, die beispielsweise durch ein an dem Straßenverkehr teilnehmendes Kraftfahrzeug 5 als Sender ausgesendet werden, empfangen und ausgewertet. Die Kommunikationsbotschaften 4 können dabei verschiedenste Informationen des Fahrzeugs 5 enthalten, wie beispielsweise den Fahrzeugtyp (Personenkraftwagen, Lastkraftwagen, Einsatzfahrzeug oder dergleichen) sowie Angaben zur Position und Geschwindigkeit des Kraftfahrzeugs 5.

Um die Richtigkeit der in der Kommunikationsbotschaft 4 enthaltenen Informationen des Kraftfahrzeugs 5 überprüfen zu können, weist der Empfänger 1 als Sensoreinrichtung eine Kamera 6 auf, welche das Kraftfahrzeug 5 aufnehmen kann, insbesondere wenn die Empfangseinheit 2 eine Kommunikationsbotschaft 4 des Kraftfahrzeugs 5 empfängt. In der Recheneinheit 3 wird dann zur Überprüfung aus dem Inhalt der Kommunikationsbotschaft 4 mindestens ein bestimmtes Merkmal extrahiert und mit einem diesem Merkmal entsprechenden Merkmal verglichen, das durch die von der Fahrzeug-zu-Umgebung-Kommunikation unabhängige Sensorik 6, die in diesem Fall durch die Sensoreinrichtung mit der einen Kamera gebildet ist.

Das in Fig. 1 dargestellte Beispiel kann insbesondere die Art des Kraftfahrzeugs (Einsatzfahrzeug) überprüfen, wenn die Kommunikationsbotschaft 4 die Nachricht aussendet, dass das Fahrzeug 5 ein Einsatzfahrzeug ist. Einsatzfahrzeuge lassen sich durch äußere Merkmale, wie Blaulicht/Martinshorn, Aufschrift oder dergleichen in einer Fotografie auf einfache Weise von anderen Fahrzeugen unterscheiden. Außerdem können in der Recheneinheit 3 des Empfängers 1 Listen abgelegt sein, welche Nummernschilder der Einsatzfahrzeuge aufweisen, so dass diese durch Vergleich mit einem aufgenommenen und aus der Aufnahme extrahierten Nummernschild erkennbar sind. In diesem Fall ist es möglich, durch das Aufnehmen eines Fotos des Kraftfahrzeugs 5 zu überprüfen, ob die durch das Fahrzeug 5 ausgesendete Kommunikationsbotschaft 5 korrekt ist.

Ein solcher Empfänger 1 kann in einem Überwachungsgerät installiert sein, beispielsweise in einer automatischen Blitzanlage zur Ahndung von Rotlichtverstößen oder Geschwindigkeitsübertretungen, welche Rotlichtverstöße oder Geschwindigkeitsübertretungen erkennt und feststellt. Wenn in ein derartiges Überwachungsgerät ein erfindungsgemäßer Empfänger 1 integriert wird, kann das Überwachungsgerät die Kommunikationsbotschaft 4 des Kraftfahrzeugs 5 empfangen, das sich als Einsatzfahrzeug beziehungsweise Rettungswaren ausgibt. In diesem Fall wird das Fahrzeug in jedem Fall fotografiert, wobei anschließend in der Recheneinheit 3 oder einer zentralen Auswertestelle das Nummernschild und der Fahrzeugtyp überprüft werden. Handelt es sich wirklich um ein Einsatzfahrzeug, welches auch an der Fahrzeugbeklebung, Farbe, Aufschrift und/oder Blaulicht erkennbar ist, und/oder wenn das zugehörige Nummernschild als Einsatzfahrzeug registriert ist, erfolgt keine Aktion und das Foto wird verworfen.

Handelt es sich jedoch um ein Fahrzeug 5, das sich nur als Einsatzfahrzeug ausgibt, kann eine Strafverfolgung eingeleitet werden. Hierzu erzeugt der Empfänger 1 eine Nachricht bspw. mit einem Foto des gewünschten Fahrzeugs 5, auf welchem vorzugsweise der Fahrer und insbesondere das Nummernschild zu erkennen ist. Mittels einer solchen Nachricht können dann anhand des Nummernschildes der Halter des Fahrzeugs ausgemacht und/oder das Nummernschild und der Fahrzeugtyp beispielsweise unmittelbar an Streifenwagen in der Umgebung übermittelt werden. Dies hat den Vorteil, dass die Verfolgung schnell möglich ist. Insofern ist es sinnvoll, die Auswertung unmittelbar in der Recheneinheit 3 des Empfängers 1 durchzuführen. Erfindungsgemäß kann anstelle der Recheneinheit 3 jedoch auch eine Zentrale vorgesehen sein, die ohne große zeitliche Verzögerung auf die Bilder der Überwachungseinrichtung zurückgreifen kann.

Das vorgeschlagene Verfahren greift auch nicht in die Privatsphäre von Privatpersonen ein, da diese nicht fotografiert werden, solange sie sich nicht als Einsatzfahrzeug ausgeben und einen Rechtsverstoß begehen. Einsatzfahrzeuge, die sich im Einsatz befinden und sich die Vorfahrt erzwingen, genießen dagegen keinen Schutz der Privatsphäre.

Durch das vorgeschlagene Verfahren wird also eine effektive Überprüfung der von einem Kraftfahrzeug 5 ausgesendeten Kommunikationsbotschaften 4 erreicht. Anstelle eines Überwachungsgeräts für Rotlichtverstöße lässt sich das Verfahren auch besonders gut bei einem Gerät für Geschwindigkeitsübertretungen verwenden, wobei es sich in diesem Fall bei dem Empfänger 1 vorzugsweise um eine mobile Überwachungseinrichtung handeln kann, so dass Verkehrssünder und Straftäter bei einer üblichen Verkehrsüberwachung gleich darauf aus dem fließenden Verkehr heraus gewunken werden können.

Für diese Überwachungsgeräte eignet es sich insbesondere, wenn es neben einer rein visuellen Überwachung auch möglich ist, aus den in der Kommunikationsbotschaft 4 der C2X-Kommunikation übertragenen Merkmalen die Position und/oder Geschwindigkeit des teilnehmenden Senders in dem Kraftfahrzeug 5 auszuwerten.

Ein Beispiel für einen entsprechenden Empfänger ist in Fig. 2 dargestellt, in welcher der Empfänger 1 mit Empfangseinheit 2 und Recheneinheit 3 als Sensoreinrichtung eine Funkpeileinrichtung 7 mit einer Anordnung von Richtantennen 8 aufweist. Mit diesen Richtantennen 8 lässt sich leicht feststellen, aus welcher Richtung die Funkbotschaften 4 empfangen wurden, wobei gegebenenfalls sogar eine Höhenangabe mit berücksichtigt werden kann. Diese Information wird nun mit der in der Kommunikationsbotschaft 4 versendeten Positionen verglichen und bei nicht vorhandener Übereinstimmung zur Strafverfolgung erfasst, wobei idealerweise das Nummernschild des Kraftfahrzeugs 5 als Falschsender mittels einer in Fig. 2 nicht dargestellten Kamera 6 erfasst wird. Ist der Falschsender kein Kraftfahrzeug 5 mit einem Nummernschild, so kann anstelle des Nummernschilds die Position des Falschsenders z. B. mittels einer Ortungsinformation des Empfängers 1 und der Positionsinformation relativ zu dem Empfänger 1 ermittelt werden.

Im Falle eines stationären Empfängers 1 kann dieser im Vorfeld das Empfangsverhalten der Umgebung vermessen. Damit ist es möglich, zusätzlich zur Richtung auch noch die Empfangsfeldstärke zu berücksichtigen und daraus gegebenenfalls auf die Entfernung zwischen dem Empfänger 1 und dem Sender in Kraftfahrzeug 5 zu schließen. Diese Information kann zusätzlich zur Validierung der versendeten Positionsinformation in der Kommunikationsbotschaft 4 verwendet werden.

In Fig. 3 ist eine weitere Variante eines Empfängers 1 dargestellt, welche als Sensoreinrichtung eine Stereokamera 9 aufweist, mit der eine Positionsbestimmung in jedem Fall möglich ist.

Erfindungsgemäß kann der Empfänger 1 auch einen Radarsensor als Überwachungseinrichtung für die Geschwindigkeit des Senders in dem Kraftfahrzeug 5 aufweisen und auf diese Weise die in der Kommunikationsbotschaft 4 übertragene Geschwindigkeit mit der tatsächlich gemessenen Geschwindigkeit vergleichen. Mit dieser Information kann auch die Positionsinformation mit überwacht werden, indem mittels Radar der Abstand zwischen dem Empfänger 1 und dem Sender in dem Kraftfahrzeug 5 ermittelt wird, insbesondere durch eine Laufzeitbetrachtung der ausgesendeten und reflektierten Radarwellen. Ein solches Verfahren eignet sich insbesondere für mobile Überwachungseinheiten. Es ist daher erfindungsgemäß besonders sinnvoll, den Empfänger 1 auch in mobile Überwachungseinrichtungen zu integrieren.

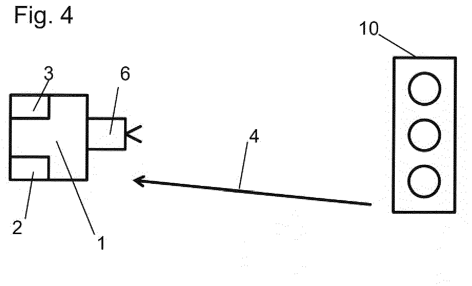

Um den Zustand von Teilnehmern an der C2X-Kommunikation zu überwachen, kann es auch sinnvoll sein, mittels eines Empfängers 1 mit Empfangseinheit 2 und Recheneinheit 3 die Kommunikationsbotschaften 4 einer Ampel 10 zu überwachen, in welcher der momentane Zustand der Ampelfarbe (rot, gelb, grün) übertragen wird. Dies ist in Fig. 4 dargestellt. Dazu weist der Empfänger 1 eine Kamera 6 auf, welche die Lichtsignale der Ampel 10 erfasst. Daraus lassen sich a posteriori die Zeiten der Ampelphasen ermitteln. Diese Informationen werden mit den versendeten Informationen verglichen und bei Fehlern der Betreiber der Ampel 10 informiert und zur Behebung des Fehlers aufgefordert. Gegebenenfalls kann die C2X-Sendeeinheit der Ampel 10 auch ausgeschaltet werden, um die Aussendung nicht korrekter Informationen zu vermeiden.

Ein entsprechender Empfänger 1 mit einer Kamera 6 als Sensoreinrichtung kann auch dazu verwendet werden, den Verkehrsfluss auf einer Straße oder Autobahn zu überprüfen. Diese Information wird mit von einer Road Side Unit empfangenen Informationen verglichen, welche auch den Verkehrsfluss übermittelt. Bei einer fehlenden Übereinstimmung kann eine mobile Überwachungseinheit zur Überprüfung ausgesendet werden, falls die Road Side Unit als stationäre Überwachungseinheit den Fehler beziehungsweise Falschsender nicht entdecken kann.

Durch das vorgeschlagene Verfahren und den entsprechenden Empfänger 1, der als mobiler Empfänger oder integriert in andere Funktionseinheiten ausgebildet sein kann, lassen sich die inhaltlichen Informationen von Kommunikationsbotschaften 4 in der C2X-Kommunikation auf einfache Weise durch eine unabhängige Sensorik 6, 7, 9 überprüfen, um Fehler zu erkennen und bewusst falsche Kommunikationsbotschaften 4 zu entlarven und die Verantwortlichen einer Strafverfolgung zu unterziehen.

## Patentansprüche

1. Verfahren zur Überprüfung von Kommunikationsbotschaften (4) in der Fahrzeug-zu-Umgebung-Kommunikation, bei dem eine Kommunikationsbotschaft (4) empfangen und ausgewertet wird, und bei der Überprüfung der Kommunikationsbotschaft (4) ein aus dem Inhalt der Kommunikationsbotschaft (4) erhaltenes Merkmal mit einem diesem Merkmal entsprechenden Merkmal verglichen wird, das durch eine von der Fahrzeug-zu-Umgebung-Kommunikation unabhängige Sensorik (6, 7, 9) erhalten wird, **dadurch gekennzeichnet, dass** bei einer fehlenden Übereinstimmung durch den Empfänger (1) eine Nachricht erzeugt wird, welche Rückschlüsse auf die Identität des Senders (5, 10) zulässt und/oder dessen Identifizierung ermöglicht.

2. Verfahren nach Anspruch 1, **dadurch gekennzeichnet, dass** das aus der Kommunikationsbotschaft (4) erhaltene Merkmal eine übertragene Position und/oder Geschwindigkeit des teilnehmenden Senders (5) ist und dass die Position und/oder Geschwindigkeit des teilnehmenden Senders (5) durch die unabhängige Sensorik (6, 7, 9) ermittelbar ist.

3. Verfahren nach Anspruch 1 oder 2, **dadurch gekennzeichnet, dass** das aus der Kommunikationsbotschaft (4) erhaltene Merkmal eine übertragene Typisierung des teilnehmenden Senders (5) ist und dass der Typ des teilnehmenden Senders (5) durch die unabhängige Sensorik (6, 7, 9) ermittelbar ist.

4. Verfahren nach einem der vorhergehenden Ansprüche, **dadurch gekennzeichnet, dass** das aus der Kommunikationsbotschaft (4) erhaltene Merkmal ein übertragener Zustand des teilnehmenden Senders (10) ist und dass der Zustand des teilnehmenden Senders (10) durch die unabhängige Sensorik (6, 7, 9) ermittelbar ist.

5. Empfänger zur Durchführung eines Verfahrens zur Überprüfung von Kommunikationsbotschaften (4) in der Fahrzeug-zu-Umgebung-Kommunikation, bei dem eine Kommunikationsbotschaft (4) empfangen und ausgewertet wird, wobei der Empfänger (1) eine Empfangseinrichtung (2) für den Empfang von Kommunikationsbotschaften (4) in der Fahrzeug-zu-Umgebung-Kommunikation, eine von der Fahrzeug-zu-Umgebung-Kommunikation unabhängige Sensoreinrichtung (6, 7, 9) und eine Recheneinheit (3) aufweist, **dadurch gekennzeichnet, dass** die Sensoreinrichtung eine Kamera (6), eine Funkpeileinrichtung (7) oder ein Geschwindigkeitsmessgerät aufweist, und die Recheneinheit (3) dazu eingerichtet ist, ein Verfahren nach einem der Ansprüche 1 bis 4 durchzuführen.

6. Empfänger nach Anspruch 5, **dadurch gekennzeichnet, dass** der Empfänger (1) als mobile oder stationäre Einheit ausgebildet ist.

7. Empfänger nach einem der Ansprüche 5 oder 6 **dadurch gekennzeichnet, dass** der Empfänger (1) in einen Teilnehmer an der Fahrzeug-zu-Umgebung-Kommunikation mit weiteren Funktionen integriert ist.

## Claims

1. Method for checking communication messages (4) in vehicle-to-environment communication, in which a communication message (4) is received and evaluated, and in the checking of the communication message (4), a feature obtained from the content of the communication message (4) is compared with a feature corresponding to this feature, said corresponding feature being obtained by a sensory system (6, 7, 9) which is independent from the vehicle-to-environment communication, **characterized in that**, in the absence of a correspondence, a message is generated by the receiver (1), allowing inferences to be made concerning the identity of the transmitter (5, 10) and/or enabling its identification.

2. Method according to Claim 1, **characterized in that** the feature obtained from the communication message (4) is a transmitted position and/or speed of the participating transmitter (5), and that the position and/or speed of the participating transmitter (5) is determinable by the independent sensor system (6, 7, 9).

3. Method according to Claim 1 or 2, **characterized in that** the feature obtained from the communication message (4) is a transmitted typification of the participating transmitter (5), and that the type of the participating transmitter (5) is determinable by the independent sensor system (6, 7, 9).

4. Method according to one of the preceding claims, **characterized in that** the feature obtained from the communication message (4) is a transmitted status of the participating transmitter (10), and that the status of the participating transmitter (10) is determinable by the independent sensor system (6, 7, 9).

5. Receiver for carrying out a method for checking communication messages (4) in vehicle-to-environment communication, in which a communication message (4) is received and evaluated, wherein the receiver (1) has a receive device (2) for the reception of communication messages (4) in vehicle-to-environment communication, a sensor device (6, 7, 9) independent from the vehicle-to-environment communication and a computing unit (3), **characterized in that** the sensor device has a camera (6), a radio direction finding device (7) or a speed-measuring device, and the computing unit (3) is configured to carry out a method according to one of Claims 1 to 4.

6. Receiver according to Claim 5, **characterized in that** the receiver (1) is designed as a mobile stationary unit.

7. Receiver according to one of Claims 5 and 6, **characterized in that** the receiver (1) is integrated into a participant in the vehicle-to-environment communication with further functions.

## Revendications

1. Procédé de contrôle de messages de communication (4) dans la communication entre un véhicule et l'environnement, dans lequel un message de communication (4) est reçu et analysé et, lors du contrôle du message de communication (4), une caractéristique obtenue à partir du contenu du message de communication (4) est comparée à une caractéristique, correspondant à ladite caractéristique, qui est obtenue par un système de capteurs (6, 7, 9) indépendamment de la communication entre le véhicule et l'environnement, **caractérisé en ce que**, lors d'une non-concordance, un message est généré par le récepteur (1), lequel message permet de tirer des conclusions sur l'identité de l'émetteur (5, 10).

2. Procédé selon la revendication 1, **caractérisé en ce que** la caractéristique obtenue à partir du message de communication (4) est une position et/ou une vitesse transmise(s) de l'émetteur participant (5) et **en ce que** la position et/ou la vitesse de l'émetteur participant (5) peut/peuvent être déterminée(s) par le système de capteurs indépendant (6, 7, 9).

3. Procédé selon la revendication 1 ou 2, **caractérisé en ce que** la caractéristique obtenue à partir du message de communication (4) est une définition de type transmise de l'émetteur participant (5) et **en ce que** le type de l'émetteur participant (5) peut être déterminé par l'intermédiaire du système de capteurs indépendant (6, 7, 9).

4. Procédé selon l'une des revendications précédentes, **caractérisé en ce que** la caractéristique obtenue à partir du message de communication (4) est un état transmis de l'émetteur participant (10) et **en ce que** l'état de l'émetteur participant (10) peut être déterminé par l'intermédiaire du système de capteurs indépendant (6, 7, 9).

5. Récepteur destiné à mettre en oeuvre un procédé de contrôle de messages de communication (4) dans la communication entre un véhicule et l'environnement, au moyen duquel un message de communication (4) est reçu et évalué, dans lequel le récepteur (1) comporte un dispositif de réception (2) destiné à recevoir des messages de communication (4) dans la communication entre le véhicule et l'environnement, un dispositif à capteurs (6, 7, 9) indépendant de la communication entre le véhicule et l'environnement et une unité de calcul (3),
**caractérisé en ce que** le dispositif à capteurs comporte une caméra (6), un dispositif de radiogoniométrie (7) ou un appareil de mesure de vitesse, et **en ce que** l'unité de calcul (3) est conçue pour mettre en oeuvre un procédé selon l'une des revendications 1 à 4.

6. Récepteur selon la revendication 5, **caractérisé en ce que** le récepteur (1) est réalisé sous la forme d'une unité mobile ou fixe.

7. Récepteur selon l'une des revendications 5 ou 6, caractériser ce que le récepteur (1) est intégré dans un dispositif participant au niveau de la communication entre le véhicule et l'environnement avec d'autres fonctions.
